# EUROPEAN PATENT APPLICATION

(11) **EP 1 760 045 A1**
(43) Date of publication of application: **07.03.2007**
(21) Application number: 05019174.1
(22) Date of filing: 03.09.2005
(51) Int. Cl.: C01B 33/027

(54) **Nanoscale silicon particles**

(71) Applicant: Degussa GmbH, 40474 Düsseldorf (DE)
(72) Inventor: Baumer, Andrea, Dr., 83349 Freutsmoos (DE); Brandt, Martin S., Dr., 85748 Garsching (DE); Stutzmann, Martin, Prof., 85435 Erding (DE); Wiggers, hartmut, Dr., 48734 Reken (DE)

(57) **Abstract**

Nanoscale silicon particles that have a BET specific surface area in the range of 100 to 800 m²/g, that consist of an essentially round, mostly unfacetted crystalline Si core surrounded by an amorphous shell, the amorphous shell comprising silica and hydrogen-terminated silicon atoms and have a paramagnetic defect density in the range of 10¹³ to 10¹⁷ 1/mg.

Essentially hydrogen terminated, nanoscale silicon particles having a paramagnetic defect density in the range of 10¹² to 10¹⁶ 1/mg obtained by treating the nanoscale silicon particles with hydrofluoric acid.

Essentially alkyl terminated nanoscale silicon particles having a paramagnetic defect density in the range of 3x10¹² to 3x10¹⁶ 1/mg obtained by treating the essentially hydrogen terminated, nanoscale silicon particles with one or more compounds selected from the group of 1-alkenes and/or 1-alkynes.

Partially alkyl terminated nanoscale silicon particles having a paramagnetic paramagnetic defect density in the range of 3x10¹² to 3x10¹⁶ 1/mg obtained by treating the nanoscale silicon particles with one or more compounds selected from the group of 1-alkenes and/or 1-alkynes.

## Description

### FIELD OF THE INVENTION

The present invention relates to nanoscale silicon particles, essentially hydrogen terminated nanoscale silicon particles, essentially alkyl terminated nanoscale silicon particles and partially alkyl terminated nanoscale particles, their production and their use.

### BACKGROUND OF THE INVENTION

Nanoscale silicon powders are of great interest on account of their special optical and electronic properties.

The continuous trend in electronics and optoelectronics to reduce device sizes down to nanometer scales has led to wide ranging scientific interest in nanoparticles. Especially, the discovery of visible photoluminescence from silicon nanoparticles and nanowires attracted a great deal of attention as it renews the hope to integrate light-emitting devices based on silicon with the well-established microelectronics technology. Due to the large surface/bulk ratio of nanoparticles, their surface properties are of particular importance for their use in electronic devices.

Nanoscale silicon particles have been reported in literature. An aerosol synthesis is reported by [W.R. Cannon et al., J. Am. Ceram. Soc. 65, 324 (1982), J. Am. Ceram. Soc. 65, 330 (1982)]. Thermal evaporation of silicon wafers by laser ablation [L.N. Dinh et al., Phys. Rev. B 54, 5029 (1996)] or CO₂ laser pyrolysis of silane [M. Ehbrecht et al., Phys. Rev. B 56, 6958 (1997)] are also used to produce nanoscale silicon particles. Further, dislodging nanoparticles from porous silicon prepared by electrochemical etching of silicon wafers was reported by Belomoin et al. [G. Belomoin et al., Appl. Phys. Lett. 80, 841 (2002) ]. For large scale production of nanoscale silicon particles usually chemical vapor deposition [L.C.P.M. de Smet et al., J. Am. Chem. Soc. 125, 13916 (2003), S. Nijhawan et al., J. Aerosol Science 34, 691 (2003)] is used, although such nanoparticles show a very pronounced inhomogenity in particle size and morphology [Dutta, W. et al., J. Appl. Phys. 77, 3729 (1995)]. Another approach is using Zintl salts [R.A. Bley et al. J. Am. Chem. Soc. 118, 12461 (1996)].

It is further known to produce silicon by pyrolysis of silane (SiH₄). In US 4661335 an aggregated, largely polycrystalline silicon powder with a low density and a BET specific surface area of in a range of 1 to 2 m²/g is described, which is obtained by pyrolysis of silane at temperatures in a range of 500°C to 700°C in a tubular reactor. Such a powder no longer meets present day requirements. The process is furthermore not economical due to the large content of unreacted silane.

Kuz'min et al., Laser Physics, Vol. 10, pp. 939 - 945 (2000), describe the production of a nanoscale silicon product by means of laser-induced decomposition of silane at reduced pressure. Each individual particle of the powder thereby produced has a polycrystalline core of 3 to 20 nm and an amorphous covering with a diameter of up to 150 nm. No information is given regarding the surface of the silicon powder.

Li et al., J. Mater. Sci. Technol., Vol. 11, pp. 71 - 74 (1995) describe the synthesis of aggregated, polycrystalline silicon powder by laser-induced decomposition of silane in the presence of argon as diluent gas at atmospheric pressure. No information is given regarding the surface of the silicon powder.

Costa et al., Vacuum, Vol. 45, pp. 1115 - 1117 (1994) describe an amorphous silicon powder whose surface contains a large proportion of hydrogen. The silicon powder is produced by decomposition of silane by means of a radiofrequency plasma reactor *in vacuo.*

Makimura et al., Jap. J. Appl. Physics, Vol. 41, pp. 144 - 146 (2002) describe the production of hydrogen-containing silicon nanoparticles by laser attrition of a silicon target *in vacuo* in the presence of hydrogen and neon. No information is given as to whether the silicon nanoparticles exist in crystalline or amorphous form.

EP-A-680384 describes a process for the deposition of a non-polycrystalline silicon on a substrate by decomposition of a silane in a microwave plasma at reduced pressure. No information is given regarding the surface properties of the silicon.

It is known to produce aggregated, nanoscale silicon powder in a hot-wall reactor [Roth et al., Chem. Eng. Technol. 24 (2001), 3]. A disadvantage of this process is that the desired crystalline silicon occurs together with amorphous silicon, which is formed by reaction of the silane on the hot reactor walls. The crystalline silicon in addition has a low BET specific surface area of less than 20 m²/g and is thus as a rule too coarse for electronic applications. Furthermore no process is described by Roth et al. in which doped silicon powders are obtained. Such doped silicon powders are, on account of their semiconductor properties, of great importance in the electronics industry. A disadvantage however is that silicon powder is deposited on the reactor walls and acts as an insulator. The temperature profile in the reactor consequently changes, and thus also the properties of the silicon powder that is produced.

WO2005049491 discloses an aggregated, crystalline silicon powder with a BET specific surface area of more than 50 m²/g. WO2005049492 discloses an aggregated, crystalline silicon powder with a BET specific surface area of more than 20 to 150 m²/g.

Although the silicon powders disclosed in the '491 and '492 application shows an improved resistance against oxidation and an improved defect density over the state of the art there is still a need to improve these caracteristics of nanoscale silicon particles.

### SUMMARY OF THE INVENTION

The term nanoscale is understood within the context of the invention to denote silicon primary particles having a mean diameter of less than 100 nm.

The term as-grown is understood to denote silicon particles prepared using a silane and hydrogen according to the present invention. There is no further treatment with hydrofluoric acid and/or alkenes or alkynes.

The term essentially hydrogen terminated is understood to denote silicon particles which have been additionally treated with hydrofluoric acid.

The term essentially alkyl terminated is understood to denote silicon particles, which have been additionally treated with hydrofluoric acid and alkenes or alkynes.

The term partially alkyl terminated is understood to denote silicon particles which have been additionally treated with alkenes or alkynes.

The term aggregate is understood to mean that spherical or largely spherical primary particles, such as for example particles that are first of all formed in the reaction, coalesce to form aggregates during the further course of the reaction.

The term doping component is understood within the context of the invention to denote an element present in the powder according to the invention. The term doping substance is understood to denote the compound that is used in the process in order to obtain the doping component.

Microwave range is understood in the context of the invention to denote a range of 900 MHz to 2.5 GHz, a frequency of 915 MHz being particularly preferred.

It is an object of the present invention to provide nanoscale silicon particles which
- have a BET specific surface area in the range of 100 to 800 m²/g
- consist of an essentially round, mostly unfacetted crystalline silicon core surrounded by an amorphous shell, the amorphous shell comprising silica and hydrogen-terminated silicon atoms
- have a paramagnetic defect density in the range of 10¹³ to 10¹⁷ 1/mg.

In a preferred embodiment the paramagnetic defect density of the as-grown nanoscale silicon particles is in the range of 10¹⁴ to 10¹⁶ 1/mg.

In an embodiment the BET surface area of the as-grown silicon nanoparticles is in the range of 150 to 350 m²/g.

In a preferred embodiment the nanoscale silicon particles according to the invention may be in the form of aggregates. The degree of coalescence of the aggregates can be influenced by the process parameters. These aggregates may form agglomerates during the further course of the reaction. In contrast to the aggregates, which as a rule cannot be decomposed, or only partially so, into the primary particles, the agglomerates form an only loose concretion of aggregates.

Furthermore the relative contribution of the dangling bond resonance of the nanosacle silicon particles according to the invention is in the range of 10 to 90%.

In addition the nanoscale silicon particles according to the invention may be doped. The following elements may preferably be employed as doping components: phosphorus, arsenic, antimony, bismuth, boron, aluminium, gallium, indium, thallium, europium, erbium, cerium, praseodymium, neodymium, samarium, gadolinium, terbium, dysprosium, chromium, iron, manganese, silver, gold, holmium, thulium, ytterbium or lutetium. Most preferred are phosphorus, arsenic, antimony, boron, aluminium, gallium, chromium, iron, manganese, silver or gold. The proportion of these elements in the nanoscale silicon particles according to the invention may be up to 5 wt.%. As a rule a silicon powder may be desirable in which the doping component is contained in the ppm or even ppb range. A range of 10¹³ to 10¹⁵ atoms of doping component/cm³ is preferred.

In addition it is possible for the nanoscale silicon particles according to the invention to contain lithium or germanium as doping component.

Finally, the elements ruthenium, osmium, cobalt, rhodium, iridium, nickel, palladium, platinum, copper and zinc may also be used as doping component of the silicon powder.

The doping component may in this connection be distributed homogeneously in the particles, or may be concentrated or intercalated in the covering or in the core of the primary particles. The doping components may preferably be incorporated at lattice sites of the silicon. This depends substantially on the nature of the doping substance and the reaction conditions.

It is also an object of the present invention to provide a process to prepare the nanoscale silicon particles in which
- at least one silane, an inert gas, hydrogen and oxygen or an oxygen source are continuously transferred to a reactor and mixed therein, and a plasma is produced by input of energy by means of electromagnetic radiation in the microwave range at a pressure of 10 to 300 mbar,
- wherein the proportion of the silane is in a range of 0/1 to 90 wt.% referred to the sum total of silane, inert gas, hydrogen and oxygen,
- the reaction mixture is allowed to cool or is cooled and the nanoscale silicon particles are separated in form of a powder from gaseous substances and
- wherein the proportion of oxygen is in a range of 0.01 to 25 atom% referred to the total of silane, and
- wherein the oxygen is transferred to the reactor together with silane, an inert gas and hydrogen or wherein the oxygen is transferred to the reactor after the reaction mixture is allowed to cool or is cooled.

The process according to the invention comprises two embodiments to prepare the as grown-nanoscale silicon particles. They differ in that in the first one the oxygen is brought into the reactor before formation of the particles, while in the second process the oxygen is brought into the reactor after the formation of the particles.

As inert gas there may mainly be used nitrogen, helium, neon or argon, argon being particularly preferred.

The oxygen may be in the form of O₂ gas itself. Also O₃ and/or NO might serve as an oxygen source.

Preferably the process according to the invention may be carried out in such a way that the starting materials are introduced into reactor in two streams, stream 1 consisting of hydrogen, optionally oxygen, and inert gas and stream 2 consisting of silane, optionally a doping substance and inert gas.

Within the context of the invention a silane may be a silicon-containing compound that yields silicon, hydrogen, nitrogen and/or halogens under the reaction conditions. SiH₄, Si₂H₆, ClSiH₃, Cl₂SiH₂, Cl₃SiH and/or SiCl₄ may preferably be used, SiH₄ being particularly preferred.

The process according to the invention is carried out so that the proportion of silane, optionally with the inclusion of the doping substance, in the gas stream is in a range of 0.1 to 90 wt.%. A high silane content leads to a high throughput and is therefore economically sensible. With very high silane contents however it was found more difficult to achieve a high BET specific surface area. A silane content of in a range of 1 to 10 wt.% is preferred in the context of the invention. The conversion of silane can be at least 98%.

A doping substance within the meaning of the invention may be a compound that contains the doping component covalently or ionically bonded and that yields the doping component, hydrogen, nitrogen, carbon monoxide, carbon dioxide and/or halogens under the reaction conditions. Particularly preferred are diborane and phosphane or substituted phosphanes such as tBuPH₂, tBu₃P, tBuPh₂P or tBuPh₂P and trismethylaminophosphane ((CH₃)₂N)₃P.

The energy input is not limited. Preferably the energy input should be chosen so that the back-scattered, unabsorbed microwave radiation is minimal and a stable plasma is formed. As a rule, in the process according to the invention the power input is in a range of 100 W to 100 kW, and particularly preferably in a range of 500 W to 6 kW. In this connection the particle size distribution may be varied by the radiated microwave energy.

The pressure range in the process according to the invention is in a range of 10 mbar to 300 mbar. In general a higher pressure leads to nanoscale silicon particles having a lower BET specific surface area, while a lower pressure leads to a silicon powder with a larger BET specific surface area.

The cooling of the reaction mixture may for example take place by an external wall cooling of the reactor or by introducing inert gas.

The processes result in the formation of the unique nanoscale silicon particles showing a high stability in air as well a high amount of reactive Si-H bonds.

Another object of the invention are essentially hydrogen terminated nanoscale silicon particles having a paramagnetic defect density in the range of 10¹² to 10¹⁶ 1/mg obtained by treating the nanoscale silicon particles with hydrofluoric acid.

In a preferred embodiment the paramagnetic defect density of the essentially hydrogen terminated nanoscale silicon particles is in the range of 10¹³ to 10¹⁵ 1/mg.

Another object is a process to prepare essentially hydrogen terminated nanoscale silicon particles having a paramagnetic defect density in the range of 10¹² to 10¹⁶ 1/mg in which the nanoscale silicon particles are treated with hydrofluoric acid.

The hydrofluoric acid preferably is an aqueous solution having an concentration in a range of 10 to 50 wt.%.

A further object of the invention are essentially alkyl terminated nanoscale silicon particles having a paramagnetic defect density in the range of 3x10¹² to 3x10¹⁶ 1/mg obtained by treating
- the essentially hydrogen terminated nanoscale silicon particles with one or more compounds selected from the group of 1-alkenes and/or 1-alkynes
or
- the as grown nanoscale silicon particles with hydrofluoric acid and one or more compounds selected from the group of 1-alkenes and/or 1-alkynes.

In a preferred embodiment the paramagnetic defect density of the essentially alkyl terminated nanoscale silicon particles is in the range of 3x10¹³ to 3x10¹⁵ 1/mg.

A further object of the invention is a process to prepare essentially alkyl terminated nanoscale silicon particles having a paramagnetic defect density in the range of 3x10¹² to 3x10¹⁶ 1/mg in that
- the essentially hydrogen terminated nanoscale silicon particles are treated with one or more compounds selected from the group of 1-alkenes and/or 1-alkynes
   or
- the as-grown nanoscale silicon particles are treated with hydrofluoric acid and one or more compounds selected from the group of 1-alkenes and/or 1-alkynes.

Another object of the invention are partially alkyl terminated nanoscale silicon particles having a paramagnetic paramagnetic defect density in the range of 3x10¹² to 3x10¹⁶ 1/mg obtained by treating the as-grown nanoscale silicon particles with one or more compounds selected from the group of 1-alkenes and/or 1-alkynes.

In a preferred embodiment the paramagnetic defect density of the partially alkyl terminated nanoscale silicon particles is in the range of 3x10¹³ to 3x10¹⁵ 1/mg.

Another object of the invention is a process to prepare partially alkyl terminated nanoscale silicon particles having a paramagnetic defect density in the range of 3x10¹² to 3x10¹⁶ 1/mg in which the as-grown nanoscale silicon particles are treated with one or more compounds selected from the group of 1-alkenes and/or 1-alkynes.

In an other embodiment the partially alkyl terminated nanoscale silicon particles having paramagnetic defect density in the range of 3x10¹² to 3x10¹⁶ 1/mg are prepared in that,
- at least one silane, an inert gas, hydrogen and oxygen are continuously transferred to a reactor and mixed therein, and a plasma is produced by input of energy by means of electromagnetic radiation in the microwave range at a pressure of 10 to 300 mbar,
- wherein the proportion of the silane is in a range of 0.1 to 90 wt.% referred to the sum total of silane, inert gas, hydrogen and oxygen,
- the reaction mixture is allowed to cool or is cooled and the nanoscale silicon particles are separated in form of a powder from gaseous substances and
- wherein the proportion of oxygen is in a range of 0.01 to 25 atom% referred to the total of silane, and
- wherein the oxygen is transferred to the reactor together with silane, an inert gas and hydrogen or wherein the oxygen is transferred to the reactor after the reaction mixture is allowed to cool or is cooled
   and
- the reaction mixture comprising the nanoscale silicon particles is treated within the reactor with one or more compounds selected from the group of 1-alkenes and/or 1-alkynes.

In a preferred embodiment the 1-alkenes or 1-alkynes used for treating the as-grown or essentially hydrogen terminated nanoscale silicon particles are selected from linear or branched 1-alkenes consisting of 3 to 25 carbon atoms are preferred and those consisting of 10 to 20 carbon atoms are most preferred. Examples are: H₂C=CH-(CH₂)₇-CH₃, H₂C=CH- (CH₂)₈-CH₃, H₂C=CH-(CH₂)₉-CH₃, H₂C=CH- (CH₂)₁₀-CH₃, H₂C=CH-(CH₂)₁₁-CH₃, H₂C=CH-(CH₂)₁₂-CH₃, H₂C=CH-(CH₂)₁₃-CH₃, H₂C=CH-(CH₂)₁₄-CH₃, H₂C=CH-(CH₂)₁₅-CH₃, H₂C=CH-(CH₂)₁₆-CH₃, H₂C=CH- (CH₂)₁₇-CH₃.

The treatment of the as-grown or essentially hydrogen terminated nanoscale silicon particles according to the invention comprises radical induced hydrosilylation, thermally induced hydrosilylation, photochemical hydrosilylation or hydrosilylation mediated by metal complexes.

The treatment comprises using the 1-alkenes or 1-alkynes in neat or dissolved in a solvent that is inert toward the reaction conditions. Usually the 1-alkenes or 1-alkynes are used in excess, referred to the nanoscale silicon particles.

Radical-induced hydrosilylation is preferably performed using peroxide type compounds that form radicals under reaction conditions, i.e. diacyl peroxide.

Thermally induced hydrosilylation is preferably performed using temperatures in the range of 100 to 300°C, more preferably in the range of 150 to 250°C.

The types of hydrosilylation are described in Buriak, Chem. Rev. 102, 1272 (2002), which is incorporated as reference.

A further object of the present invention is the use of the as-grown, essentially hydrogen terminated, essentially alkyl terminated and partially nanoscale silicon particles for the production of electrical and electronic components, electronic circuits and electrically active fillers.

### BRIEF DESCRIPTION OF THE DRAWINGS

**Fig. 1:** TEM image of as-grown nanoscale silicon particles according to the invention. A crystalline silicon core is surrounded by an amorphous SiO₂ shell.
In Fig. 2 to 6
   (I) denotes as-grown nanoscale silicon particles,
   (II) denotes essentially hydrogen terminated nanoscale silicon particles,
   (III) denotes essentially alkyl terminated nanoscale silicon particles and
   (IV) denotes partially alkyl terminated nanoscale silicon particles.

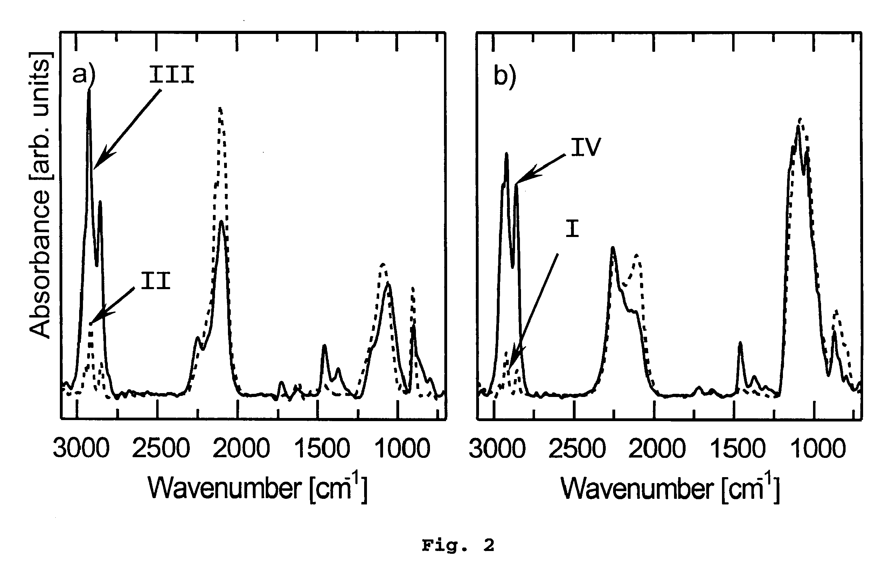

**Fig. 2:** FTIR spectra of essentially alkyl-terminated nanoscale silicon particles (Fig. 2a) and partially alkyl-terminated nanoscale silicon particles (Fig. 2b). In both cases, peaks due to alkyl chains appear in the spectra around 2900 cm⁻¹ while the Si-H peaks at 2100 cm⁻¹ decrease upon hydrosilylation. For comparison, the FTIR spectra of as-grown nanoscale-silicon particles and of essentially hydrogen terminated nanoscale silicon particles are also shown.

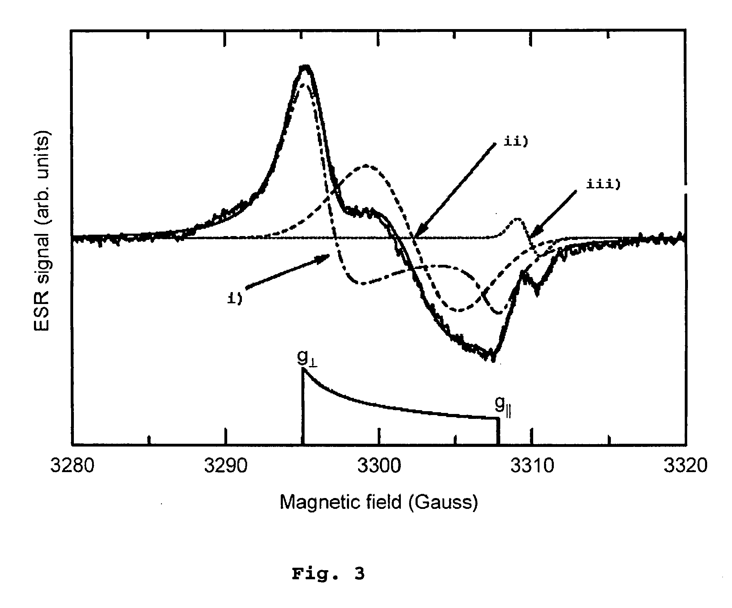

**Fig. 3:** The ESR signal of the as-grown nanoscale silicon particles is shown in dependence of the magnetic field. The signal can be fitted by deconvolution into a powder pattern with g_{∥} = 2.0018 and g_{┴} = 2.0091 (i), a broad Gaussian line at g_{db} = 2.0052 (dangling bond) (ii) and a very narrow line at g_{E'} = 2.0006 (E'-centers in the quartz glass sample holder) (iii).

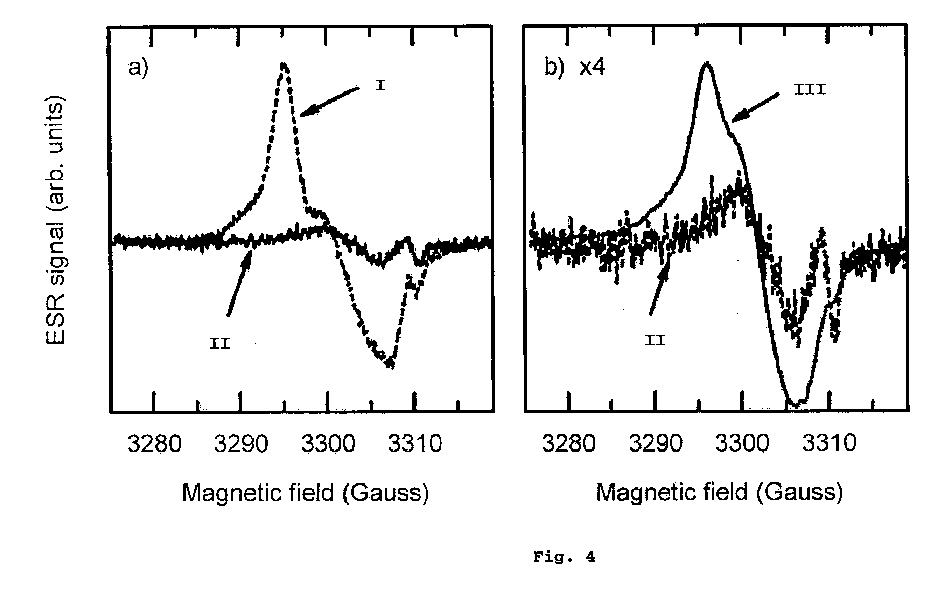

**Fig. 4:** a) The ESR spectrum of essentially hydrogen-terminated nanoscale silicon particles is compared to the spectrum of the as-grown nanoscale silicon particles. The signal amplitude and thereby the paramagnetic defect density is significantly reduced by the HF treatment.
   b) The spectrum of the hydrogen-terminated particles of a) is magnified by a factor of four and the spectrum of essentially alkyl-terminated particles is included. An increase of the signal amplitude is observed. The spectrum of the essentially alkyl-terminated particles is much less noisy than the other ESR spectra shown. This is due to a longer measurement time and a larger amount of sample volume used for this measurement. Both factors were corrected for.

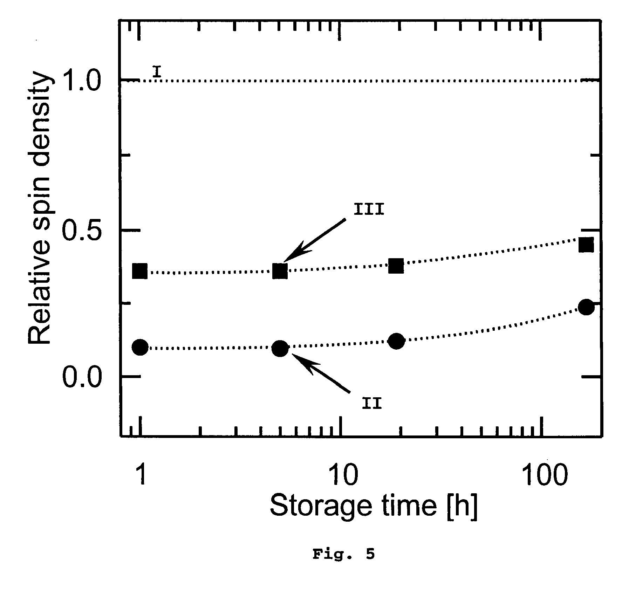

**Fig. 5** shows the stability of essentially hydrogen terminated and essentially alkyl terminated nanoscale silicon particles in air as determined by electron spin resonance. The spin density of the essentially hydrogen-terminated and the essentially alkyl-terminated nanoscale silicon particles normalized to the spin density of the as-grown nanoscale silicon particles is shown in dependence of the storage time in ambient atmosphere after preparation.

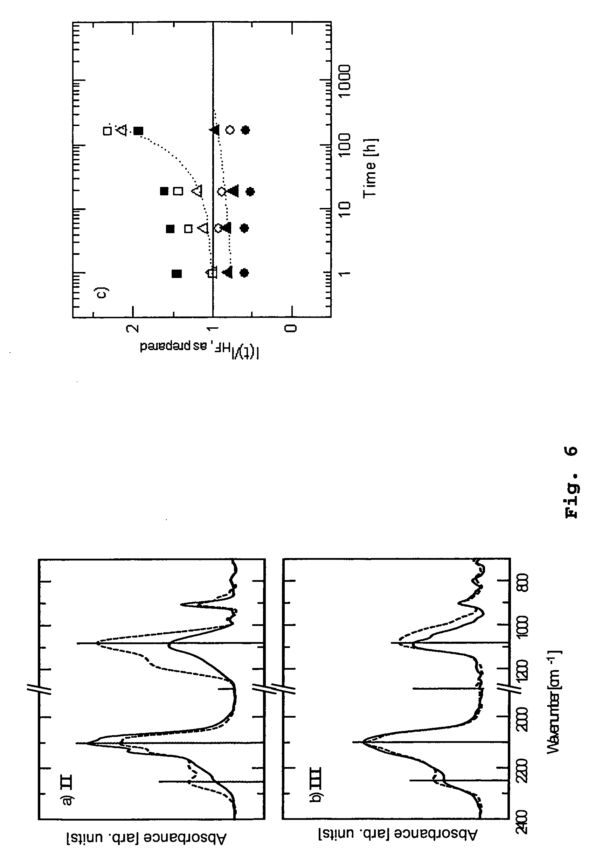

**Fig. 6** shows the stability of essentially hydrogen terminated and essentially alkyl terminated nanoscale silicon particles in air as determined by FTIR.
   a) shows selected parts of the FTIR spectra of essentially hydrogen terminated nanoscale silicon particles immediately after preparation (continuous line) and after storage in air for one week (dashed line).
   b) essentially alkyl terminated nanoscale silicon particles immediately after preparation (continuous line) and after storage in air for one week (dashed line).
   c) shows the time dependence of the intensity of the FTIR absorption at three different wavenumbers (1080 cm⁻¹ (triangles), 2100 cm⁻¹ (circles) and 2250 cm⁻¹ (squares)), normalized to the intensity of the respective FTIR absorption in the essentially hydrogen terminated nanoscale silicon particles immediately after preparation. Open symbols denote essentially hydrogen terminated, solid symbols essentially alkyl terminated nanoscale silicon particles.

### DETAILED DESCRIPTION

While hydrogen-terminated nanoscale silicon particles are found to be stable in ambient atmosphere for at least some hours, the resistance against degradation/oxidation with respect to the initial defect density can be further improved by alkyl termination, namely by more than a factor of two.

HF etching was performed to produce essentially hydrogen terminated nanoscale silicon particles. In comparison to the as-grown nanoscale silicon particles, these show a decrease of the FTIR absorption intensity of the oxygen peaks at 1080 cm⁻¹ (caused by Si-O-Si moieties) and at 2250 cm⁻¹ (caused by H-Si-(O,O,O)), indicating the removal of an oxide sheath (Fig. 2). Hydrogen termination is clearly shown by the increase of the H-Si-(Si,Si,Si) peak at 2100 cm⁻¹ and the appearance of the SiH₂ scissors mode at 906 cm⁻¹.

Alkyl termination was performed to produce essentially and partially alkyl terminated silicon nanoparticles by hydrosilylation. When as-grown silicon nanoparticles are hydrosilylated, the FTIR-absorption at 2100 cm⁻¹ is decreased and a large increase of the C-H absorption bands around 2900 cm⁻¹ is observed (partially alkyl terminated particles). The same behavior of the FTIR absorption bands is observed when hydrogen terminated silicon nanoparticles are hydrosilylated. The broad absorption line around 2100 cm⁻¹ consists of several smaller peaks and shoulders. Based on the comparison to the well-known FTIR modes of H on crystalline silicon surfaces, the different vibration modes observed can be assigned to SiH₃ (2134 cm⁻¹), SiH₂ (2102 cm⁻¹) and SiH (2082 cm⁻¹) vibrations.

The behavior of the hydrogen and alkyl terminated surfaces in ambient atmosphere are studied using ESR measurements on samples stored in air for different amounts of time. The ESR paramagnetic defect density of the essentially hydrogen and essentially alkyl terminated nanoscale silicon particles was normalized to the paramagnetic defect density of the as-grown nanoscale silicon particles of typically 4x10¹⁴ 1/mg and is plotted in Fig. 5 as a function of the storage time.

The paramagnetic defect density of the essentially hydrogen terminated nanoparticles is typically reduced by one order of magnitude compared to the as-grown nanoscale silicon particles. Following hydrosilylation, the paramagnetic defect density of the essentially alkyl terminated nanoparticles is typically 1.2x10¹⁴ 1/mg.

The ESR spectrum of the hydrogen-terminated nanoscale silicon particles is shown in Fig. 4a) together with the spectrum of the as-grown nanoscale silicon particles. In addition to the background signal (iii), the hydrogen-terminated nanoscale silicon particles show predominantly a dangling bond resonance (ii). This leads to the conclusion, that the defects responsible for the powder pattern (i) are located mainly on the surface of the crystalline silicon core of the nanoparticles. During the HF etch process these defects can be passivated by H. On the other hand, the weak dangling bond signal (ii) remaining after the HF treatment suggests that at least some of the defects giving rise to this signal are located in the subsurface or core region of nanoparticles, inaccessible to HF.

The ESR lineshape both of the essentially hydrogen terminated and of the essentially alkyl terminated particles stays mainly unaltered during exposure to air for air for one week apart from a growth of the overall ESR amplitude. However, the powder pattern reappears for the hydrogen-terminated particles after one week storage which indicates that the surface becomes oxidized again.

Relative to their initial paramagnetic defect density, the alkyl-terminated nanoscale silicon particles are more resistant against oxidation in ambient atmosphere than the hydrogen-terminated particles.

### EXPERIMENTAL:

### Methods:

The BET surface (Brunauer, Emmett, and Teller surface) is determined according to DIN 66131.

For the electron spin resonance (ESR) measurements, approximately 3 mg of the differently terminated nanoscale silicon particles each were filled into teflon tubes, which were sealed with teflon tape. These teflon tubes were then put inside standard ESR quartz tubes with an outer diameter of 4 mm. Room temperature ESR measurements were performed in a conventional cw X-band ESR spectrometer (Bruker ESP-300, with a TE₁₀₂ cavity) operating at 9.27 GHz. Phase-sensitive detection and a magnetic field modulation amplitude of 2 Gauss were used.

ESR is used to determine the paramagnetic defect density. The number of paramagnetic defects is calculated from the ESR resonance by double integration and comparison to a known reference standard, phosphorous-doped silicon.

Fourier-transform infrared (FTIR) spectroscopy was performed to study the chemical composition of the particles. Nanoparticles were dispersed in dried spectroscopic grade KBr by the pressed-disk technique.

### As-grown nanoscale silicon particles

Apparatus: A microwave generator (Muegge company) is used to produce a plasma. The microwave radiation is focused in the reaction space by means of a tuner (3-rod tuner). A stable plasma is generated in the pressure range from 10 mbar up to 300 mbar and at a microwave output of 100 to 6000 W by the design of the wave guide, the fine adjustment by means of the tuner and the accurate positioning of the nozzle acting as electrode.

The microwave reactor consists of a quartz glass tube of 30 mm diameter (external) and a length of 120 mm, which is employed in the plasma applicator.

**Example 1:** An SiH₄/argon mixture (mixture 1) of 100 sccm (standard centimetre cube per minute; 1 sccm = 1 cm³ gas per minute referred to 0°C and atmospheric pressure) of SiH₄ and 900 sccm of argon as well as a mixture of 10000 sccm of each of argon and hydrogen and 5 sccm of oxygen, are fed to the microwave reactor. An output of 500 W from a microwave generator is fed to the gaseous mixture and a plasma is thereby produced. The plasma flare leaving the reactor through a nozzle expands into a space whose volume of ca. 20 1 is large compared to the reactor. The pressure in this space and in the reactor is adjusted to 200 mbar. The particles are separated from gaseous substances in a downstream-connected filter unit.
**BET:** 170 m²/g

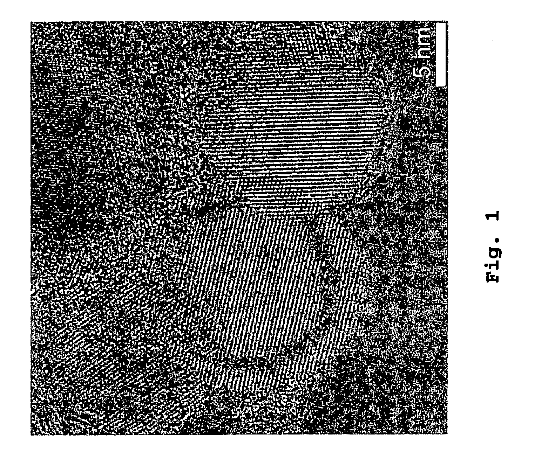

**TEM:** Transmission electron microscopy (TEM) shows that the nanoparticles have a mean diameter of 20 nm and consist of a round, mostly unfacetted crystalline silicon core surrounded by an amorphous shell of SiO₂ (Fig. 1).

**FTIR:** A very broad peak around 1080 cm⁻¹ and a peak at 1180 cm⁻¹ are found in the IR absorbance spectrum (Fig. 2b) due to symmetric and asymmetric Si-O-Si stretching vibrations, respectively and indicate the presence of a large amount of oxide. At 2100 cm⁻¹, H-Si-(Si,Si,Si) stretching vibrations are observed. By subsequent substitution of the three backbonded silicon atoms by O atoms, this stretching mode is shifted to larger wavenumbers. For three backbonded O atoms (H-Si-(O,O,O)), the stretching mode is observed at 2250 cm⁻¹. The comparatively large IR absorbance due to H stretching vibrations clearly shows that the as-grown nanoscale silicon particles are not covered with oxide alone, but that there also exist hydrogen-terminated silicon atoms which are generated during the plasma growth process.

In support of the evidence from FTIR concerning the location of the Si-H bonds observed, the high structural quality evident from the TEM picture in Fig. 1 also suggests that most of the Si-H bonds will be at the interface between the crystalline silicon core and the amorphous SiO₂ shell or in the amorphous SiO₂ shell, in particular the Si-H bonds with oxygen atoms backbonded to them. The partial H termination is most likely generated during the plasma growth process where an excess of H₂ is used. At ambient atmosphere, oxidation of these sites starts, but due to steric and energetic reasons not all Si-H bonds can be attacked by O and some H-terminated sites remain. The peak at 870 cm⁻¹ originates from H-Si-(O,O,O) bending vibrations.

**ESR:** The results of the ESR measurements of the as-grown nanoscale silicon particles are shown in Fig. 3. The resonance signal consists of a superposition of several lines, which can be separated by the deconvolution shown in Fig. 3. Three contributions all arising from unsaturated silicon bonds have been found:
(i) The dominant paramagnetic defects of the nanoscale silicon particles according to the invention at the crystalline Si/SiO₂ interface are silicon dangling bonds similar to the so called P_{b}-, P_{b0}- and P_{b1}-centers, at the Si/SiO₂ interface of crystalline silicon. As the nanoscale silicon particles are oriented arbitrarily with respect to the external magnetic field, these centers contribute to the ESR resonance line in the form of a powder pattern. A powder pattern with g_{∥} = 2.0018 and g_{┴} = 2.0091 is included in Fig. 3, as well as a convolution of the pattern with Lorentzian lines whose linewidths linearly increase from ΔB_{pp,∥} = 1.8 G to ΔB_{pp,┴} = 2.6 G. The g-factors of the pattern are very similar to the known values for the P_{b}-, P_{b0}- and P_{b1}-centers [Cf. E.H. Poindexter, P.J. Caplan, B.E. Deal, R.R. Razouk, J. Appl. Phys. 52, 879 (1981)].
(ii) Also at crystalline Si/SiO₂ interfaces, isotropic resonances caused by dangling bonds at structural imperfections are often observed with a g-factor of g_{db}= 2.0053 and a linewidth of ΔBₚₚ = 6-8 G. In contrast to the P_{b}-centers, this defect is called dangling bond at Si/SiO₂ interfaces. Similarly, the dangling bond signal in amorphous silicon appears at a g-factor of g = 2.0055 with a linewidth of ΔBₚₚ = 5-7 G. For microcrystalline silicon a g-factor of g = 2.0052 was reported. To be able to simulate the ESR spectra observed for the nanoscale silicon particles, a similar Gaussian line with g_{db} = 2.0052 and ΔBₚₚ = 6 G has to be included in the deconvolution [J.L. Cantin, H.J. von Bardeleben, J. Non-Cryst. Solids 303, 175 (2002)].
(iii) The weak narrow Gaussian line at g_{E'} = 2.0007 with a linewidth of ΔBₚₚ = 1.5 G is due to E'-centers inside the quartz glass sample holder. The total fit, which is the sum of the three contributions discussed, matches the experimentally observed resonance lineshape very well as it can be seen in Fig. 3.

For the as-grown nanoscale silicon particles a total paramagnetic defect density of typically 4.0×10¹⁴ 1/mg is observed. However, depending on the exact growth conditions, this concentration can also be as small as 10¹³ 1/mg or as large as 10¹⁷ 1/mg. Assuming the paramagnetic defect density of the nanoscale silicon particles is assumed to be the density of bulk crystalline silicon, 2.33 g/cm³, this results in a paramagnetic defect density in the range of 2x10¹⁶ to 2x10²⁰ cm⁻³. The relative contribution of the dangling bond resonance is typically 30% in as-grown samples, but can be as small as 10% and as large as 90%.

### Essentially hydrogen terminated nanoscale silicon particles

**Example 2**: For the hydrogen termination, 100 mg of nanoscale silicon particles prepared in example 1 were immersed into 1 ml liquid HF (50% in H₂O). Washing out the HF was done by adding 10 ml H₂O, centrifuging at 13 000 rpm for five minutes and decanting the water/HF mixture. This cleaning process was repeated three times. Finally, the essentially hydrogen terminated nanoscale silicon particles according to the invention were dried in a stream of N₂.

**FTIR:** In comparison to the as-grown particles, both the peaks at 1080 cm⁻¹ and at 2250 cm⁻¹ have clearly decreased in intensity but have not disappeared completely indicating some remaining oxide or native oxide freshly grown after the HF treatment on the surface (Fig. 2). A likely origin for the remaining oxide are clustered nanoparticles in which some parts of the clustered particles are protected against the attack by HF. H termination is clearly shown by the increase of the H-Si-(Si,Si,Si) peak around 2100 cm⁻¹ and the appearance of the SiH₂ scissors mode at 906 cm⁻¹.

**ESR:** The ESR spectrum of the essentially hydrogen-terminated nanoscale silicon particles is shown in Fig. 4 in comparison to the spectrum of the nanoscale silicon particles of example 1. A significant reduction of the ESR paramagnetic defect density by one order of magnitude is observed in comparison to the as-grown particles. The paramagnetic defect density was determined to be 4x10¹³ 1/mg. However, depending on the exact process conditions, this concentration can also be as small as 10¹² 1/mg or as large as 10¹⁶ 1/mg.

### Essentially alkyl terminated nanoscale silicon particles

Example 3: Alkyl termination was achieved by thermally-induced hydrosilylation by immersing 100 mg of nanoscale silicon particles prepared in example 1 in 0.5 ml HF (50% in H₂O), adding 2 ml of 1-octadecene and heating the particles under permanent stirring and bubbling with N₂ for 90 minutes at 150°C. Subsequently, the samples were washed five times in hexane and tetrahydrofuran (10 ml), again by centrifuging and decanting, before they were dried with N₂.

### Partially alkyl terminated nanoscale silicon particles

Example 4: Alkyl-terminated surfaces can also be produced without adding HF during the hydrosilylation. In this case, the 100 mg of nanoscale silicon particles prepared in example 1 were immersed directly in 2 ml of 1-octadecene and further treated as in example 3.

**FTIR:** The FTIR spectra of the octadecanyl-terminated nanoscale silicon particles of example 3 and 4 are shown in Fig. 2 in comparison to the samples from example 1 and 2, respectively. Sharp, aliphatic C-H stretching bands in the region of 2850-2960 cm⁻¹ and weaker C-H deformation bands at 1350-1470 cm⁻¹ appear. Further, the Si-H stretching vibration at 2100 cm⁻¹ clearly decreases during hydrosilylation.

Fig. 2 a),b) show that only H-Si-(Si,Si,Si) takes part in the hydrosilylation, while the concentration of H-Si-(O,O,O) remains effectively unchanged. This is most likely caused by the respective localization of the different Si-H bonds in the nanoparticles. While most of the H-Si-(Si,Si,Si) bonds are expected to be at the surface, the H-Si-(O,O,O) are likely to be in the oxide sheath and therefore not accessible for hydrosilylation.

**ESR:** The ESR spectrum of the 1-octadecanyl-terminated nanoscale silicon particles of example 3 is displayed in Fig. 4b). For reference, the spectrum of the hydrogen-terminated nanoscale silicon particles, which has already been shown in Fig. 4a), is also included in b). Please note that the scale in Fig. 4b is magnified up by a factor of four compared to Fig. 4a).

The paramagnetic defect density of the hydrosilylated particles is increased by a factor of about three relative to the hydrogen-terminated samples. Depending on the exact process conditions, the paramagnetic defect densities can be as small as 3×10¹² and as large as 3×10¹⁶ mg⁻¹, corresponding to 6×10¹⁵ to 6×10¹⁹ cm⁻³. In these samples, both the powder pattern (i) and the dangling bond signal (ii) contribute approximately equally to the paramagnetic defect density.

### Stability in air: Essentially hydrogen terminated and essentially alkyl terminated nanoscale silicon particles

After preparation, the samples were stored for various times in ambient atmosphere and then characterized by FTIR measurements. In Fig. 6a) the FTIR spectrum of the as prepared essentially hydrogen terminated nanoparticles is compared to the spectrum obtained after storage in ambient atmosphere for one week. The reformation of a native oxide is clearly detectable. To study the oxidation kinetics in more detail, the normalized FTIR intensity at several characteristic frequencies was determined and plotted as a function of the storage time (Fig. 6c). As expected, a clear increase of the intensity of the oxygen-related absorption lines (1080 cm⁻¹ and 2250 cm⁻¹) is found, while the purely H-related line (2100 cm⁻¹) decreases. After one week, the intensity of the Si-O-Si stretching mode has increased by about a factor of 2.5. The same experiment was also performed on the essentially alkyl-terminated nanoparticles as shown in Fig. 6b and c). The initial absorbance due to oxygen-related vibrations is similar in the H-terminated and hydrosilylated samples, indicating a similar oxide concentration. However, in contrast to the H-terminated samples, oxide formation is reduced by at least a factor of two in the hydrosilylated nanoparticles. The decrease of the Si-H and Si-H₂ vibrational mode intensity is below the noise level and therefore also smaller compared to the corresponding decrease in the H-terminated particles.

During storage in air, the paramagnetic defect density of essentially hydrogen terminated samples increases by a factor of 2.5 within one week, while it increases by only a factor of 1.25 in the alkyl terminated samples during the same time.

## Claims

1. Nanoscale silicon particles, **characterized in that** they
- have a BET specific surface area in the range of 100 to 800 m²/g
- consist of an essentially round, mostly unfacetted crystalline Si core surrounded by an amorphous shell, the amorphous shell comprising silica and hydrogen-terminated silicon atoms
- have a paramagnetic defect density in the range of 10¹³ to 10¹⁷ 1/mg.

2. Nanoscale silicon particles according to claim 1, **characterized in that** the relative contribution of the dangling bond resonance is in the range of 10 to 90%.

3. Nanoscale silicon particles according to claims 1 or 2 **characterized in that** they are doped.

4. A process to prepare the nanoscale silicon particles according to the claims 1 to 3, **characterized in that**
- at least one silane, an inert gas, hydrogen and oxygen or an oxygen source are continuously transferred to a reactor and mixed therein, and a plasma is produced by input of energy by means of electromagnetic radiation in the microwave range at a pressure in a range of 10 to 300 mbar,
- wherein the proportion of the silane is in a range of 0.1 to 90 wt.% referred to the sum total of silane, inert gas, hydrogen and oxygen,
- the reaction mixture is allowed to cool or is cooled and the nanoscale silicon particles are separated in form of a powder from gaseous substances and
- wherein the proportion of oxygen is in a range of 0.01 to 25 atom% referred to the total of silane, and
- wherein the oxygen is transferred to the reactor together with silane, an inert gas and hydrogen or wherein the oxygen is transferred to the reactor after the reaction mixture is allowed to cool or is cooled.

5. Essentially hydrogen terminated, nanoscale silicon particles having a paramagnetic defect density in the range of 10¹² to 10¹⁶ 1/mg obtained by treating the nanoscale silicon particles according to the claims 1 to 3 with hydrofluoric acid.

6. A process to prepare essentially hydrogen terminated, nanoscale silicon particles having a paramagnetic defect density in the range of 10¹² to 10¹⁶ 1/mg **characterized in that**, the nanoscale silicon particles according to the claims 1 to 3 are treated with hydrofluoric acid.

7. Essentially alkyl terminated nanoscale silicon particles having a paramagnetic defect density in the range of 3x10¹² to 3x10¹⁶ 1/mg obtained by treating
- the essentially hydrogen terminated nanoscale silicon particles according to claim 5 with one or more compounds selected from the group of 1-alkenes and/or 1-alkynes
or
- the nanoscale silicon particles according to the claims 1 to 3 with hydrofluoric acid and one or more compounds selected from the group of 1-alkenes and/or 1-alkynes.

8. A process to prepare essentially alkyl terminated nanoscale silicon particles having a paramagnetic defect density in the range of 3x10¹² to 3x10¹⁶ 1/mg according to claim 7 **characterized in that**,
- the essentially hydrogen terminated nanoscale silicon particles are treated with one or more compounds selected from the group of 1-alkenes and/or 1-alkynes
or
- the nanoscale silicon particles are treated with hydrofluoric acid and one or more compounds selected from the group of 1-alkenes and/or 1-alkynes.

9. Partially alkyl terminated nanoscale silicon particles having a paramagnetic paramagnetic defect density in the range of 3x10¹² to 3x10¹⁶ 1/mg obtained by treating the nanoscale silicon particles according to the claims 1 to 3 with one or more compounds selected from the group of 1-alkenes and/or 1-alkynes.

10. A process to prepare partially alkyl terminated nanoscale silicon particles having a paramagnetic defect density in the range of 3x10¹² to 3x10¹⁶ 1/mg according to claim 9 **characterized in that**, the nanoscale silicon particles are treated with one or more compounds selected from the group of 1-alkenes and/or 1-alkynes.

11. A process to prepare partially alkyl terminated nanoscale silicon particles having paramagnetic defect density in the range of 3x10¹² to 3x10¹⁶ 1/mg according to claim 9 **characterized in that**,
- at least one silane, an inert gas, hydrogen and oxygen are continuously transferred to a reactor and mixed therein, and a plasma is produced by input of energy by means of electromagnetic radiation in the microwave range at a pressure of 10 to 300 mbar,
- wherein the proportion of the silane is in a range of 0.1 to 90 wt.% referred to the sum total of silane, inert gas, hydrogen and oxygen,
- the reaction mixture is allowed to cool or is cooled and the nanoscale silicon particles are separated in form of a powder from gaseous substances and
- wherein the proportion of oxygen is in a range of 0.01 to 25 atom% referred to the total of silane, and
- wherein the oxygen is transferred to the reactor together with silane, an inert gas and hydrogen or wherein the oxygen is transferred to the reactor after the reaction mixture is allowed to cool or is cooled
and
- the reaction mixture comprising the nanoscale silicon particles is treated within the reactor with one or more compounds selected from the group of 1-alkenes and/or 1-alkynes.

12. A process according to the claims 8, 10 and 11, **characterized in that** the treatment of the nanoscale silicon particles comprises radical induced hydrosilylation, thermally induced hydrosilylation, photochemical hydrosilylation or hydrosilylation mediated by metal complexes.

13. Use of the nanoscale silicon particles according to the claims 1-3, 5, 7 and 9 for the production of electrical and electronic components, electronic circuits and electrically active fillers.
